# EUROPÄISCHE PATENTANMELDUNG

(11) **EP 3 489 842 A1**
(43) Veröffentlichungstag der Anmeldung: **29.05.2019**
(21) Anmeldenummer: 17203255.9
(22) Anmeldetag: 23.11.2017
(51) Int. Cl.: G06F 17/30

(54) **FORENSISCHE DATENBANK**

(71) Anmelder: PKE Holding AG, 1100 Wien (AT)
(72) Erfinder: FEST, Florian Rudolf, 2490 Haschendorf (AT); KERSCHBAUMER, Joachim, 2500 Baden (AT); KLOIHOFER, Werner, 4210 Gallneukirchen (AT); KUHN, Walter, 1060 Wien (AT)
(74) Vertreter: Burgstaller, Peter

(57) **Zusammenfassung**

Computerimplementiertes Verfahren zur Generierung einer Datenmenge zu einer Analyse von Ereignissen eines räumlich begrenzten Bereiches (1),
wobei eine Bereichsbilddatenmenge durch eine fotographische Aufnahme des Bereiches (1) erstellt wird,
in welcher Bereichsbilddatenmenge ein Objekt (6,17) detektiert wird und eine Trajektorie umfassend temporäre Koordinaten des Objektes (6,17) aus der Bereichsbilddatenmenge als Objektdaten umfassend objektbezogene Attribute extrahiert wird, wobei
bereichsexterne Sensordaten umfassend bereichsexterne physikalische Größen als bereichsexterne Attribute,
welche bereichsexternen Sensordaten durch außerhalb des Bereiches (1) und/oder an der Bereichsgrenze (23) des Bereiches angeordnete bereichsexterne Sensoren ermittelbar sind, und/oder
bereichsinterne Sensordaten umfassend bereichsinterne physikalische Größen als bereichsinterne Attribute,
welche bereichsinternen Sensordaten durch innerhalb des Bereiches (1) angeordnete Sensoren ermittelbar sind, erstellt werden,
wobei die Objektdaten mit den bereichsexternen Sensordaten und/oder den bereichsinternen Sensordaten in der Datenbank durch die jeweiligen Attribute und/oder durch Attributbereiche zur Generierung einer Schnittmenge verknüpfbar sind.

## Beschreibung

Die Erfindung betrifft ein computerimplementiertes Verfahren zur Generierung einer Datenmenge zu einer Analyse von Ereignissen eines räumlich begrenzten Bereiches,
wobei eine Bereichsbilddatenmenge durch eine fotographische Aufnahme des Bereiches erstellt wird,
in welcher Bereichsbilddatenmenge ein Objekt detektiert wird und eine Trajektorie umfassend temporäre Koordinaten des Objektes aus der Bereichsbilddatenmenge als Objektdaten umfassend objektbezogene Attribute extrahiert wird.

Das Objekt kann sich innerhalb des Bereiches über einen Zeitraum bewegen. Das Objekt kann auch eine Person oder ein Tier sein. Im Rahmen der Offenbarung dieser Erfindung wird nicht zwischen dem Begriff Objekt, dem Begriff Tier und dem Begriff Person unterschieden.

Ein räumlich begrenzter Bereich ist als ein Bereich zu verstehen, der beispielsweise durch bauliche Maßnahmen oder sicherheitstechnische Maßnahmen abgegrenzt ist. Es ist für den Fachmann und auch den Laien eine Bereichsgrenze erkennbar, welche Bereichsgrenze eindeutig den Bereich von der Umgebung abgrenzt. Die Art und Weise der Bereichsgrenze ist für das erfindungsgemäße Verfahren nur insofern von Bedeutung, als dass die Bereichsgrenze Stellen aufweisen kann, an welchen Stellen ein Objekt in den Bereich gelangen kann. Ein räumlich begrenzter Bereich kann beispielsweise ein Gebäude, ein definiertes Areal wie beispielsweise ein Flughafen oder ein Staatsgebiet sein. Ein Gebäude umfasst Eingänge, durch welche Eingänge ein Objekt an einer vorgesehenen Stelle in das Gebäude gelangen kann, und beispielsweise Öffnungen wie Fenster, die im eigentlichen Sinn nicht zum Betreten des Gebäudes konzipiert sind.

Die Erfindung schließt nicht aus, dass der Bereich in weitere Teilbereiche unterteilt ist.

Es ist Stand der Technik, ein bewegtes Objekt in einer Videoaufnahme zu detektieren und aus dem Video Trajektorien des bewegten Objektes zu extrahieren. Eine Trajektorie umfasst zumindest Koordinaten und eine Zeitangabe.

Beispielsweise beschreibt JP2015114685 ein Verfahren, bei welchem Verfahren Trajektorien und eine Farbeigenschaft eines bewegten Objektes aus einem Videomaterial extrahiert werden und diese Daten in einer Datenbank abgespeichert werden.

WO2017017808 offenbart ein Verfahren, bei welchem Verfahren ein Videomaterial hinsichtlich einer Trajektorie und einer Eigenschaft eines bewegten Objektes zu durchsuchen und die Ergebnisse einer solchen Suche in einer Datenbank abzuspeichern sind.

Die oben angeführten Verfahren sind jedoch auf den Einsatz in einem räumlich unbeschränkten Bereich ausgelegt; es findet sich in den Dokumenten kein Hinweis auf eine Definition eines Raumes. Bei einer sturen Anwendung dieser Verfahren in der Forensik oder bei der Überwachung eines Gebäudes werden sehr große Datenmengen generiert, die nur schwer überblickbar sind. Dies ist insbesondere in der Forensik ein entscheidender Nachteil, zumal es im Rahmen einer forensischen Untersuchung von entscheidender Bedeutung ist, Geschehnisse wie beispielsweise zuvor abgelaufene Handlungen schnell und vor allem effektiv zu untersuchen.

Es ist Aufgabe der vorliegenden Erfindung, die Nachteile des Standes der Technik in Hinblick auf einen räumlich begrenzten Bereich zu überwinden und ein Verfahren zur Verfügung zu stellen, mittels welchem Verfahren ein Benutzer in der Lage ist, die in einer Bereichsbilddatenmenge aufgezeichnete Ereignisse zeitnah oder zeitlich versetzt in einer effektiven Art und Weise zu untersuchen.

Diese Aufgabe wird durch eine Vorrichtung und ein Verfahren gemäß den Ansprüchen gelöst.

Erfindungsgemäß wird dies dadurch erreicht, dass
bereichsexterne objektbezogene Sensordaten umfassend bereichsexterne physikalische Größen als bereichsexterne Attribute,
durch welche bereichsexternen objektbezogenen Sensordaten eine physikalische Größe beschreibend das Objekt durch außerhalb des Bereiches und/oder an der Bereichsgrenze des Bereiches angeordnete bereichsexterne Sensoren beschreibbar sind, und/oder bereichsexterne gerätebezogene Sensordaten umfassend bereichsexterne physikalische Größen als bereichsexterne Attribute,
durch welche bereichsexternen objektbezogenen Sensordaten eine physikalische Größe beschreibend ein in der Umgebung angeordnetes bereichsexternes Gerät durch außerhalb des Bereiches und/oder an der Bereichsgrenze des Bereiches angeordnete bereichsexterne Sensoren beschreibbar sind, und/oder
bereichsinterne gerätebezogene Sensordaten umfassend bereichsinterne physikalische Größen als bereichsinterne Attribute,
durch welche bereichsinternen gerätebezogene Sensordaten physikalische Größen beschreibend ein im Bereich angeordnetes bereichsinternes Gerät durch innerhalb des Bereiches angeordnete Sensoren beschreibbar sind, erstellt werden,
wobei die Objektdaten mit den bereichsexternen Sensordaten und/oder den bereichsinternen Sensordaten in der Datenbank durch die jeweiligen Attribute und/oder durch Attributbereiche zur Generierung einer Schnittmenge verknüpfbar sind.

Unter Objektdaten umfassend objektbezogene Attribute sind Angaben zu verstehen, welche das Objekt anhand von physikalischen Größen beschreiben.

Die bereichsexternen Sensordaten zeichnen sich dadurch aus, dass diese außerhalb des Bereiches oder an der Bereichsgrenze des Bereiches ermittelt werden und zeitnah oder zeitversetzt äußere Einflüsse auf den Bereich und/oder auf das Geschehen im Inneren des Bereiches haben.

Die bereichsinternen Sensordaten betreffen das im Bereich vorliegende Volumen. Dementsprechend haben die bereichsinternen Sensordaten einen Einfluss auf das Geschehen in dem Bereich.

Die bereichsexternen Sensordaten und die bereichsinternen Sensordaten können weiters in objektbezogene Sensordaten und in objektfremde oder gerätebezogene Sensordaten unterteilt werden.

Unter objektbezogenen Sensordaten werden im Rahmen dieser Erfindung durch einen Sensor messbare Daten verstanden, welche Daten durch ein auf das bewegte Objekt reagierendes Messsystem messbar sind.

Unter objektfremden oder gerätebezogenen Daten werden hingegen jene Daten verstanden, welche messbaren Daten die Umgebung um das Objekt beschreiben und nicht durch das bewegte Objekt ausgelöst werden.

Ein Attribut weist einen bestimmten Attributwert X auf; im Rahmen dieser Erfindung ist dieser Wert eine physikalische Größe wie beispielsweise ein Farbwert. Im Rahmen der Offenbarung dieser Erfindung ist unter einem Attributbereich ein sich zwischen Grenzwerten X+Δx, X-Δx erstreckender Bereich zu verstehen.

Der Begriff einer physikalischen Größe ist in allgemeinen Nachschlagewerken definiert. Das Nachschlagewerk Wikipedia definiert beispielsweise den Begriff der physikalischen Größe als "eine quantitativ bestimmbare Eigenschaft eines physikalischen Objektes, Vorgangs oder Zustands. Ihr Wert (Größenwert) wird als Produkt aus einem Zahlenwert (der Maßzahl) und einer Maßeinheit angegeben. Vektorgrößen werden durch Größenwert und Richtung angegeben". Wikipedia umfasst weiters eine beispielhafte Liste von physikalischen Größen.

Das erfindungsgemäße Verfahren zeichnet sich sohin aus, dass eine Datenbank geschaffen wird, welche Datenbank zumindest eine Trajektorie eines in einem Bereich bewegten Objektes und durch bereichsexterne Sensoren außerhalb des Bereiches ermittelbare bereichsexterne objektfremde und/oder bereichsexterne objektbezogene Daten umfasst. Alternativ oder ergänzend hierzu kann die Datenbank neben den Trajektorien bereichsinterne objektfremde Daten umfassen, welche bereichsinternen objektfremden Daten innerhalb des Bereiches ermittelbar sind.

Eine forensische Suche kann im Allgemeinen dadurch effektiv gestaltet werden, dass in einer Daten und Attribute umfassenden Datenmenge unter Ausnützen von gegenseitigen Beziehungen von Daten eine möglichst kleine Schnittmenge geschaffen wird, welche Schnittmenge in einem akzeptablen Zeitaufwand auf ein bestimmtes Ereignis durchsucht werden kann.

Das erfindungsgemäße Verfahren liefert einen Beitrag zu einer effektiven forensischen Suche, da durch das erfindungsgemäße Verfahren eine solche Schnittmenge geschaffen wird, in welcher Schnittmenge mit einem geringen Zeitaufwand nach einem in dem Bereich stattgefundenen Ereignis gesucht werden kann.

Das erfindungsgemäße Verfahren liefert weiters einen Beitrag zu der Nachvollziehbarkeit der aus dem Bildmaterial extrahierten Objektdaten umfassend eine Trajektorie des Objektes. Die Extraktion einer Trajektorie aus einem Bildmaterial ist nach dem Stand der Technik keinesfalls ein banales Verfahren. Durch den Abgleich der Trajektorie des Objektes mit bereichsinternen Sensordaten und mit bereichsexternen Sensordaten umfassend objektbezogene Daten und objektfremde Daten ist die extrahierte, gegebenenfalls fehlerhafte Trajektorie nachvollziehbar. Insbesondere bietet das erfindungsgemäße Verfahren die Möglichkeit, die extrahierten Trajektorien durch objektfremde Größen zu verifizieren.

Ein wesentlicher Baustein in der forensischen Suche ist, dass die Schnittmenge, in welcher Schnittmenge ein bestimmtes Ereignis gesucht wird, bei einer Übereinstimmung von Attributen ein hohes Maß an Genauigkeit aufweist. Dies ist bei Verfahren nach dem Stand der Technik insbesondere bei der Bildung einer Schnittmenge aus einer Vielzahl von Attributen nicht möglich. Das erfindungsgemäße Verfahren erlaubt im Wesentlichen die Bildung einer Schnittmenge aus der Trajektorie, bereichsinterner Daten und bereichsexterner Daten. Die ermittelten Daten können sohin gegenseitig abgeglichen werden, um eine genaue Schnittmenge zu bilden.

Die Anforderung der Genauigkeit kann im Rahmen der Offenbarung des erfindungsgemäßen Verfahrens auch so verstanden werden, dass bei einem Abgleich von Attributbereichen die erlaubte Varianz der abgeglichenen Attributwerte exakt definierbar ist.

Die Objektdaten umfassen objektbezogene Attribute, mittels welcher weiters physikalische Eigenschaften des Objektes beschrieben werden können. Die Objektdaten können weiters beispielsweise einen Farbwert, Angaben zu der Geometrie und der Gestalt des Objektes umfassen. Diese Objektdaten können auch eine Bilddatei des im Bereich bewegten Objektes umfassen.

Das erfindungsgemäße Verfahren kann weiters zur Generierung von verifizierten Datenbanken verwendet werden, welche Datenbanken eine Grundlage für maschinell lernende Systeme bilden. Die erfindungsgemäße Datenbank zeichnet sich dadurch aus, dass das Bildmaterial durch einen Abgleich mit Sensordaten auf seine Plausibilität hin untersucht werden kann.

In Hinblick auf eine forensische Untersuchung oder eine Überwachung zeichnet sich das erfindungsgemäße Verfahren dadurch aus, dass weitere sicherheitsrelevante Daten in die Datenbank zu integrieren und so eine bessere Analyse eines Geschehens durchzuführen sind.

Ein Beispiel von sicherheitsrelevanten Daten sind Zugangsdaten. Die bereichsexternen gerätebezogenen Sensordaten können Zutrittsdaten über den Eintritt und/oder Austritt eines Objektes in den Bereich beziehungsweise aus dem Bereiche umfassen, welche Zutrittsdaten durch eine Zutrittskontrolle als ein in an der Bereichsgrenze angeordnetes bereichsexternes Gerät generiert werden.

Nach dem Stand der Technik können Zugangskontrollen elektronische Geräte umfassen, die durch ein elektronisches Signal einen Zugang freigeben oder diesen versperren. Unter Verweis auf die oben erwähnte Liste von physikalischen Größen ist festzustellen, dass ein elektronisches Signal eine physikalische Größe ist, welche mittels eines Sensors messbar ist und als Sensordaten in der Datenmenge speicherbar ist. Die Sensordaten als Zugangsdaten können beispielsweise die Information umfassen, wann oder über welchen Zeitraum welcher elektronische Impuls erzeugt wurde, um den Zugang freizugeben beziehungsweise zu sperren.

Eine Zutrittskontrolle ist an der Bereichsgrenze eines räumlich abgegrenzten Bereiches angeordnet, sodass eine Person oder ein Objekt bei Eintritt in den Bereich die Zutrittskontrolle passieren muss. Gleichsam ist eine Austrittskontrolle an der Bereichsgrenze eines räumlich abgegrenzten Bereiches angeordnet, sodass eine Person oder ein Objekt bei Austritt aus dem Bereich die Austrittskontrolle passieren muss. Wegen der Anordnung der Zutrittskontrollen oder Austrittskontrollen an der Bereichsgrenze des Bereiches sind diese Sensordaten auch eben dort messbar. Die Zugangsdaten haben insofern einen Einfluss auf den Bereich, da beispielsweise eine Person oder ein Objekt einen Zutritt in den Bereich erhält und somit das Geschehen in diesem Bereich beeinflussen kann.

Die Zutrittsdaten können zusätzlich zu den Sensordaten Zutrittsbilddaten umfassen, welche Zutrittsbilddaten mit Teilen der Bereichsbilddatenmenge abgleichbar sind. Zu den Zutrittsbilddaten ähnliche Teile der Bereichsbilddatenmenge können in der Datenbank abgespeichert werden.

Die bereichsexternen gerätebezogenen Sensordaten können als physikalische Größen Wetterdaten umfassen, welche Wetterdaten mittels einer Wetterstation als ein bereichsexternes Gerät ermittelbar sind. Wetterdaten wie Temperatur, Sonneneinstrahlung et cetera sind als physikalische Größen durch Messmethoden nach dem Stand der Technik messbar. Wetterdaten als bereichsexterne physikalische Größen wie beispielsweise Wärme in zu dem Bereich benachbarten Zonen haben zweifelsfrei einen Einfluss auf den Bereich.

Die bereichsinternen gerätebezogenen Sensordaten können physikalische Eigenschaften des Volumens des Bereiches umfassen, welche physikalischen Eigenschaften durch ein im Bereich angeordnetes Bereichsmessgerät als Bereichsinternes Gerät ermittelbar sind. Die bereichsinternen Sensordaten können beispielsweise physikalische Größenangaben hinsichtlich der Temperatur, der Größe des Bereiches et cetera umfassen. Da diese bereichsinternen Sensordaten über einen Zeitraum veränderlich sein können, können diese über einen Zeitraum bestimmbar sein.

Die bereichsinternen gerätebezogenen Sensordaten können Daten mit bereichsinternen physikalischen Größen über ein in dem Bereich situiertes Bediengerät als ein bereichsinternes Gerät umfassend eine elektrische Steuerung umfassen.

Ein Bediengerät ist ein Gerät, welches ein Benutzer durch seine Bedienung steuert. Ein Bediengerät kann ein Computer, eine Bankomatkassa oder ähnliches sein.

Das erfindungsgemäße Verfahren kann umfassen, dass die extrahierten Trajektorien und eine Vielzahl von bereichsexternen Sensordaten und/oder eine Vielzahl von bereichsinternen Sensordaten in einer Datenbank laufend abgespeichert werden. Der Benutzer kann in dieser Datenbank unter Definition von relevanter Eingaben suchen, wobei hier die abgespeicherten Trajektorien und die Sensordaten durch die Definition von wechselseitigen Bedingungen verknüpft werden können.

Das erfindungsgemäße Verfahren kann auch derart durchgeführt werden, dass die Bereichsbilddatenmenge in Hinblick auf zu extrahierende Trajektorien untersucht wird und relevante Sensordaten aus einer weiteren Datenbank abgerufen werden.

Die Trajektorien, die bereichsexternen Sensordaten und die bereichsinternen Sensordaten können auch in der Datenbank während der Detektion des Objektes unter einer Auswahl einer bereichsexternen Teilmenge bereichsexterner physikalischer Parameter und/oder einer bereichsinternen Teilmenge bereichsinterner physikalischer Parameter aus einer Menge von ermittelbaren bereichsexternen physikalischen Parametern beziehungsweise bereichsinternen physikalischen Parametern erstellt werden.

Die hier offenbarte Erfindung betrifft auch ein Verfahren zu einer forensischen Suche in einer Datenbank, welche nach den obigen Methoden erstellt wird, wobei die Objektdaten und die bereichsexternen objektfremden Sensordaten und/oder die bereichsexternen objektbezogenen Sensordaten und/oder die bereichsinternen Sensordaten zur Generierung einer Schnittmenge auf gleiche Attribute und/oder Attributbereiche durchsucht werden.

Zum besseren Verständnis der Erfindung wird diese anhand der nachfolgenden Figuren näher erläutert.

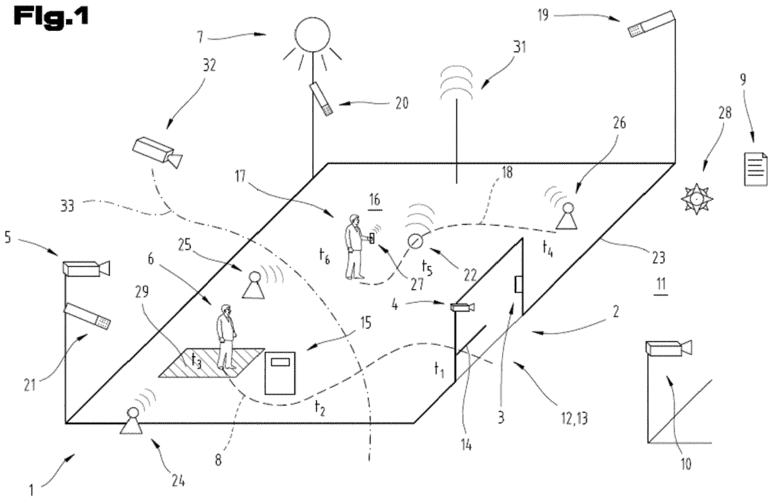

Figur 1 zeigt eine Anwendungsmöglichkeit des erfindungsgemäßen Verfahrens bei einer sicherheitstechnischen Überwachung eines Bereiches.

### FIGURENBESCHREIBUNG

Figur 1 veranschaulicht eine mögliche Anwendung des erfindungsgemäßen Verfahrens bei einer sicherheitstechnischen Überwachung eines Bereiches 1 sowie einer Analyse der in diesem Bereich detektierten Ereignisse.

Der Bereich 1 ist von einem Umgebungsbereich 11 durch geeignete Maßnahmen nach dem Stand der Technik wie beispielsweise bauliche Maßnahmen getrennt. Es sind in Figur 1 aus Übersichtlichkeitsgründen keine derartigen baulichen Maßnahmen, sondern nur die Bereichsgrenze 23 dargestellt.

Es ist vorgesehen, dass ein Betreten des Bereiches 1 nur über den Zugang 12 und ein Verlassen des Bereiches 1 nur über den Ausgang 13 gestattet ist. Bei dem in Figur 1 gezeigten Ausführungsbeispiel sind Eingang 12 und Ausgang 13 einstückig ausgebildet.

Die Bereichsgrenze 23 mitsamt dem Zugang 12 kann durch eine in Figur 1 nicht eingetragene Alarmanlage als ein bereichsexternes Gerät nach dem Stand der Technik gesichert sein, welche Alarmanlage einen Alarm ausgibt, falls ein Überqueren der Bereichsgrenze 23 durch ein Objekt oder durch eine Person 6, 17 detektiert wird. Die Alarmanlage wird im Sinne der Offenbarung der Erfindung als ein bereichsinternes Gerät angesehen, wenn mit der Alarmanlage der Bereich 1 überwacht wird.

In Ergänzung zu einer Alarmmeldung kann die Alarmanlage auch eine Störung der Alarmanlage melden.

Ein in dem Bereich 1 stattfindendes Bereichsereignis wird mittels einer Bereichskamera 5 als ein bereichsinternes Gerät aufgenommen. Eine sich im Bereich 1 entlang einer bereichsinternen Bewegungsbahn 8 bewegende erste Person 6 und eine sich entlang einer bereichsinternen Bewegungsbahn 18 bewegenden zweite Person 17 wird somit durch die Bereichskamera 5 unter der Generierung von Objektdaten aufgenommen. Neben den Objektdaten können als bereichsinterne gerätebezogene Daten für die Bereichskamera 1 Daten über die Position, die Schwenkposition, die Drehposition, die Kippposition, die Neigungsposition und die Zoomeinstellungen der Bereichskamera 1 generiert werden. Letztere physikalischen Größen können als bereichsinterne gerätebezogene Sensordaten in die erfindungsgemäße Datenbank eingehen.

Die Bereichskamera 5 kann auch eine Wärmebildkamera umfassen. Mittels einer Wärmebildkamera nach dem Stand der Technik ist die Temperatur eines Objektes und/oder einer Person 6, 17 messbar, welche Temperatur als bereichsinterne Sensordaten in die erfindungsgemäße Datenbank eingehen können.

Der Bereich 1 kann weiters mittels einer Bereichslichtquelle 7 als ein bereichsinternes Gerät beleuchtet werden. Physikalische Größen betreffend die Funktion der Bereichslichtquelle 7 wie beispielsweise der Betrieb, eine Störung, Angaben über das emittierte Lichtspektrum gehen als bereichsintere gerätebezogene Sensordaten ein.

Es können Geräusche im Bereich 1 mit Hilfe von Bereichsmikrofonen 19, 20, 21 als bereichsinterne Geräte aufgenommen werden, wobei aufgenommene Geräusche als bereichsinterne gerätebezogene Sensordaten eingehen. Bei einer Aufnahme eines Geräusches durch die Bereichsmikrofone 19, 20, 21 können auch durch Anwendung von Techniken nach dem Stand der Technik die temporären Koordinaten der Geräuschquelle 22 bestimmt werden, was wiederum als bereichsinterne gerätebezogene Sensordaten eingeht.

Es ist im Bereich 1 ein Bankomat 15 als ein bereichsinternes Gerät umfassend eine elektrische Steuerung angeordnet. Physikalische Daten betreffend die Bedienung des Bankomaten 15 wie Transaktionsdaten können als bereichsinterne gerätebezogene Daten in die erfindungsgemäße Datenbank eingehen.

Es können im Bereich 1 Funkstationen 24, 25, 26 wie beispielsweise WLAN-Router oder Bluetooth-Funkstationen als bereichsinterne Geräte angeordnet sein, welche Funkstationen 24, 25, 26 mit einem Funkgerät 27 wie einem Mobiltelefon kommunizieren. Techniken nach dem Stand der Technik erlauben es, das Funkgerät 27 bei einer Kommunikation mit den Funkstationen 24, 25, 26 zu orten. Eine Ortung eines Funkgerätes 27 umfasst eine Koordinatenangabe und eine Zeitangabe, wobei eine Trajektorie umfassend Koordinatenangaben und Zeitangaben als bereichsinterne gerätebezogene Sensordaten in die erfindungsgemäße Datenbank eingehen können.

Ein Mobiltelefon nach dem Stand der Technik kann ein Gyroskop umfassen, sodass Beschleunigungsdaten als bereichsinterne gerätebezogene Sensordaten in die erfindungsgemäße Datenbank eingehen können.

Vor dem Eintritt in den Bereich 1 muss oder sollte die erste Person 6 die im Zugang 12 angeordnete Zutrittskontrolle 2 passieren. Die Zutrittskontrolle 2 umfasst ein Zutrittskartenlesegerät 3 und eine Zutrittskamera 4. Nach dem Auslesen einer in Figur 1 nicht dargestellten Zutrittskarte, welche von der ersten Person 6 in das Zutrittskartenlesegerät 3 zum Auslesen der Zutrittskarte eingeführt wird, und der Aufnahme eines Bildes der im Umgebungsbereich 11 und sohin außerhalb des Bereiches 1 befindlichen ersten Person 6 kann eine Zutrittssperre 14 geöffnet werden, um der ersten Person 6 einen Zugang in den Bereich zu gewähren. Das Bild kann ein Charakteristikum der im Zugang befindlichen Person umfassen. Die durch die Zutrittskontrolle 2 generierten physikalischen Größen gehen als bereichsexterne objektbezogene Daten ein.

Figur 1 zeigt weiters eine Umgebungskamera 10 als ein bereichsexternes Gerät zur Aufnahme von Umgebungsereignissen im Umgebungsbereich 11.

Der Bereich 1 umfasst weiters einen Teppich 29 mit Drucksensoren als ein bereichsinternes Gerät, mittels welchen Drucksensoren eine auf dem Teppich stehende oder gehende Person 6, 17 detektierbar ist. Mittels der im Teppich 29 integrierten Drucksensoren können insbesondere die Fußabdrücke und das Schrittmuster gemessen werden. Drucksensoren nach dem Stand der Technik geben ein elektrisches Signal und einen Zeitpunkt des Auftretens des elektrischen Signals aus. Über die Stärke des elektrischen Signals kann weiters die Belastung, in weiterer Folge die Kraft, mit welcher die Person einen Fuß auf den Teppich setzt, berechnet werden. Diese physikalischen Größen gehen als bereichsinterne gerätebezogene Daten ein.

Es liegen weiters Sollbereichsdaten 9 vor, welche Sollbereichsdaten Sollbereichsattribute über Abläufe in dem Bereich 1 umfassen. Die Sollbereichsdaten 9 können in einer weiteren Datenbank abgespeichert und über einen bereichsexternen Sensor auslesbar sein. Die Sollbereichsdaten 9 umfassen bereichsexterne objektbezogene Attribute mit der Angabe, wann eine Person 6, 17 an welchen Ort sein darf.

Figur 1 zeigt weiters eine bewegte Kamera 32, welche bewegte Kamera 32 entlang einer Kamerabewegungsbahn 33 einen Teil der Umgebung 11 und den Bereich 1 durchkreuzt. Die bewegte Kamera 32 kann Teil einer Drohne oder eines Fahrzeuges sein, was in Figur 1 aus Übersichtlichkeitsgründen nicht dargestellt ist.

Das erfindungsgemäße Verfahren nützt die oben beschriebenen und in Figur 1 symbolhaft eingetragenen Vorrichtungen wie beispielsweise Kameras 2, 5, 10, 32 zur Generierung einer Datenmenge, welche zur Überwachung des Bereiches 1 und/oder zur Analyse von Ereignissen herangezogen wird. Das erfindungsgemäße Verfahren basiert sinnvoller Weise auf der Implementierung von Computern.

Mittels der Bereichskamera 5 und/oder der bewegten Kamera 32 wird eine Bereichsbilddatenmenge generiert. Es können hierbei der Bereich 1 als Ganzes oder Teilbereiche des Bereiches 1 aufgenommen werden. Unter Anwendung von Methoden nach dem Stand der Technik ist die sich im Bereich 1 bewegende erste Person 6 und zweite Person 17 in der Bereichsbilddatenmenge detektierbar. Es können pro Frame eines Videos Koordinaten der ersten Person 6 und der zweiten Person 17 sowie eine jeweilige Zeitangabe extrahiert werden, sodass Koordinaten und eine Zeitangabe umfassende Trajektorien aus der Bereichsbilddatenbank extrahierbar sind.

Die bereichsinternen Objektdaten umfassen die aus der Bilddatenmenge extrahierbare Trajektorie der ersten Person 6. Die bereichsinternen Objektdaten umfassen die aus der Bilddatenmenge extrahierbare Trajektorie der zweiten Person 17. Unter Verweis auf die gängige Lehre ist die Extraktion einer Trajektorie jedoch nicht fehlerfrei. Es ist Aufgabe der hier offenbarten Erfindung eine Datenbank bereitzustellen, welche Datenbank unter anderem eine Verifizierung der extrahierten Trajektorien erlaubt und eine effektive Suche in der Datenbank erlaubt.

Mittels einer bereichsinternen Trajektorie umfassend eine temporäre Koordinatenangabe für die erste Person 6 ist die bereichsinterne Bereichsbewegungsbahn 8 in einem lokalen Koordinatensystem und in einem globalen Koordinatensystem hinreichend genau darstellbar. Analog hierzu ist mittels der Trajektorie umfassend eine temporäre Koordinatenangabe für die zweite Person 17 die zweite Bewegungsbahn 18 in einem lokalen Koordinatensystem und in einem globalen Koordinatensystem hinreichend genau darstellbar.

Die erste Person 6 ist zu den Zeitpunkten t1, t2 und t3 an den in Figur 1 eingetragenen Orten des Bereiches.

Die erste Person 6 betritt zu einem Zeitpunkt t1 den Bereich 1 über den Zugang 12. Die Zutrittskontrolle 2 umfasst ein Zutrittskartenlesegerät 3 und eine Zutrittskamera 4.

Beim Zutritt betätigt die erste Person 6 das Zutrittskartenlesegerät 2, wodurch Zutrittskontrolldaten als eine messbare bereichsexterne physikalische Größe generiert werden. Die Zutrittskontrolldaten können beispielsweise ein elektrisches Signal sein, über welches Signal die Zutrittssperre 14 freigegeben wird. Ebenso umfasst die Freigabe einer Zutrittssperre 14, welche ein Magnetschloss umfassen kann, ein elektrisches Signal oder die Änderung eines elektrischen Signals, welches Signal oder dessen Änderung als eine physikalische Größe messbar ist. Diese physikalische Größe kann gemeinsam mit einer Zeitangabe - hier t1 - abgespeichert werden.

Beim Zutritt wird mit Hilfe der Zutrittskamera 4 ein Zutrittsbild der im Umgebungsbereich 11 befindlichen ersten Person 6 aufgenommen. Das Zutrittsbild kann ein zur Gesichtserkennung heranziehbares Bild und/oder ein Fingerabdruck und/oder eine Aufnahme der Person oder Körperteile der Person sein. Allenfalls umfasst das Zutrittsbild bereichsexterne physikalische Größen wie beispielsweise messbare Körpergrößen und/oder Proportionen des Körpers der ersten Person 6 und eine Zeitangabe. Diese bereichsexternen physikalischen Größen sind mitsamt einer Zeitangabe, Buchungsnummer und/oder Kartennummer in der Datenbank abspeicherbar. Die Buchungsnummer und/oder die Kartennummer dienen der Identifikation des Objektes.

Zum Zeitpunkt t2 benutzt die erste Person 6 den Bankomaten 15, welches eine elektrische Steuerung umfasst und somit messbare elektrische Signale verarbeitet, die als bereichsinterne physikalische Größe mitsamt einer relevanten Zeitangabe in der Datenmenge abspeicherbar sind.

Die erste Person 6 ist zum Zeitpunkt t3 an dem in Figur 1 gekennzeichneten Ort des Bereiches 1.

Die zweite Person 17 ist zu den Zeitpunkten t4, t5 und t6 an den in Figur 1 eingetragenen Orten des Bereiches 1.

Zum Zeitpunkt t4 ist die zweite Person 17 an dem in Figur 1 gekennzeichneten Ort des Bereiches 1.

Die zweite Person 17 verursacht zum Zeitpunkt t5 ein Geräusch; die zweite Person 17 ist zum Zeitpunkt t5 eine Geräuschquelle.

Zum Zeitpunkt t6 ist die zweite Person 17 an dem in Figur 1 gekennzeichneten Ort und benutzt ein Funkgerät 27, welches die zweite Person 17 hält.

Die Bereichslichtquelle 7, welche wie nach dem Stand der Technik üblich mittels elektrischer Energie betrieben wird, beleuchtet den Bereich 1. Die hiermit verbundenen bereichsinternen physikalischen Größen sind ebenso in der Datenmenge abspeicherbar.

Es ist im Bereich 1 ein Bereichsmessgerät 31 angeordnet, mittels welchem Bereichsmessgerät 31 physikalische Eigenschaften des Volumens des Bereiches 1 ermittelbar sind, wobei unter dem Begriff Volumen für den Fachmann nachvollziehbar das durch das Bereichsmessgerät 31 messbare Volumen zu verstehen ist.

### Nachvollziehbarkeit der Trajektorie der ersten Person 6:

Die Trajektorie der ersten Person 6 gibt an, dass die erste Person 6 zu durch die Trajektorie definierten Zeitpunkten an gewissen Orten des Bereiches 1 war.

Die bereichsexternen Sensordaten umfassen die Angabe, dass die erste Person 6 zum Zeitpunkt t1 bei der oder zumindest in der Nähe der Zutrittskontrolle 2 war. Die bereichsinternen Sensordaten umfassen die Angabe, dass die erste Person 6 zum Zeitpunkt t2 bei dem Bankomaten 15 war, zumal der Bankomat 15 von einer Person bedient wurde. Die bereichsinternen Sensordaten umfassen weiters die Angabe, dass die erste Person 6 über den Teppich 29 ging.

Bei Anwendung des erfindungsgemäßen Verfahrens können die in den ersten Objektdaten enthaltenen Ortsangaben durch einen Abgleich der Trajektorie mit den bereichsexternen Sensordaten und den bereichsinternen Sensordaten verifiziert werden.

Der Abgleich erfolgt unter Bildung einer Schnittmenge. Bei einer Übereinstimmung von Trajektorie und bereichsexternen Sensordaten umfasst die Schnittmenge für den Zeitpunkt t1 eine Ortsangabe im Bereich der Zutrittskontrolle 2. Für den Zeitpunkt t2 umfasst die Schnittmenge eine Ortsangabe im Bereich des Bankomaten 15. Für den Zeitpunkt t3 umfasst die erstellte Schnittmenge eine Ortsangabe des Teppichs 29.

Die bereichsinternen Sensordaten können auch als bereichsinternes Attribut umfassen, dass die Bereichslichtquelle 7 eingeschaltet ist.

Die erste Person 6 und der Bankomat15 bilden sohin einen Schatten auf der Bereichsoberfläche 16 aus, wodurch der gängigen Lehre folgend die Trajektorie nicht genau extrahierbar ist. In Anhängigkeit dieser bereichsinternen Sensordaten und der durch mittels der Zutrittskamera erstellte bereichsexternen Sensordaten umfassend einer bereichsexternen physikalischen Größe über die Gestalt der ersten Person 6 kann eine Varianz für die Übereinstimmung der Ortsangaben definiert werden, innerhalb welcher Varianz eine Schnittmenge gebildet wird.

Es kann auch die Trajektorie der ersten Person 6 mit den Sollbereichsdaten 9 abglichen werden.

### Nachvollziehbarkeit der Trajektorie der zweiten Person 17:

Die zweite Person 17 verursacht zum Zeitpunkt t5 ein Geräusch; die zweite Person 17 ist zum Zeitpunkt t5 ein Teil der Lärmquelle 16. Das Geräusch zum Zeitpunkt t5 ist mit Hilfe der als bereichsinterne Sensoren wirkenden Bereichsmikrofone 19, 20, 21 als eine physikalische Größe detektierbar, wobei weiters mittels Verfahren nach dem Stand der Technik der Ort der Lärmquelle und der Zeitpunkt t5 bestimmbar ist. Diese physikalischen Größen beschreibend das Geräusch ist mit der Trajektorie der zweite Person 17 abgleichbar, wodurch die Trajektorie der zweite Person 17 unter Bildung einer Schnittmenge nachvollzogen werden kann.

Die zweite Person 17 betätigt weiters zum Zeitpunkt t6 ein Funkgerät 27, welches Funkgerät 27 in Funkkommunikation mit den im Bereich 1 angeordneten Funkstationen 24, 25, 26 steht, wodurch ein als bereichsinterne Sensordaten abspeicherbares Funksignal messbar ist. Mittels gängiger Methoden ist das Funkgerät 27 zu orten. Unter der Annahme, dass das Funkgerät 27 von der zweiten Person 17 gehalten wird, können die ermittelten Ortsdaten des Funkgerätes 27 mit der Trajektorie der zweiten Person 17 zum Zeitpunkt t6 abgeglichen werden. Weiters kann eine IMEI-Identifikation abgerufen werden, um so die zweite Person 17 über die IMEI-Identifikation des Funkgerätes zu identifizieren.

Mittels eines Bereichsmessgerätes 31 als bereichsinternes Gerät können physikalische Eigenschaften des Volumens des Bereiches 1 wie Temperatur, Helligkeit et cetera gemessen werden. Die extrahierten Trajektorien als Objektdaten können mit den physikalischen Eigenschaften des Volumens als bereichsinterne Sensordaten abgeglichen werden, um so gegebenenfalls eine Ursache für eine fehlerhafte Trajektorie zu ermitteln.

### Effektivität einer forensischen Suche

Wie in Figur 1 veranschaulicht bewegen sich die erste Person 6 und die zweite Person 17 in dem Bereich. Die die erste Person 6 betreffende Schnittmenge umfasst eine Trajektorie und eine Ortsangabe im Bereich des Zuganges 17 zu einem Zeitpunkt t1. Weiters kann die Schnittmenge Signale des Kartenlesegerätes 3, der Zutrittssperre 14 zu einem zu t1 nahen Zeitpunkt, das heißt in einem gewissen Zeitraum um t1 (Attributbereich) gebildet werden.

Die die zweite Person 17 betreffende Schnittmenge umfasst nur eine Trajektorie zu einem Zeitpunkt t4. Die die zweite Person 17 betreffende Schnittmenge umfasst keine den Zugang betreffenden Attribute, weshalb angenommen werden muss, dass sich die zweite Person 17 ohne Berechtigung in dem Bereich 1 aufhält.

Eine forensische Analyse wird sich sohin auf die Analyse der bereichsinternen Bewegungsbahn 18 der zweiten Person 17 konzentrieren.

Mittels der Umgebungskamera 10 kann der Umgebungsbereich 11 überwacht werden. Bei Detektion eines gefährlichen Objektes 28 oder einer gesuchten Person im Umgebungsbereich 11 kann das Interesse bestehen, zu verifizieren, ob das gefährliche Objekt oder die gesuchte Person auch im Bereich ist.

Die Umgebungskamera 10 kann ein Bild des gefährlichen Objektes 28 anfertigen, wobei physikalische Größen beschreibend das gefährliche Objekt 28 als bereichsexterne Sensordaten in der Datenbank abspeicherbar sind.

Gleichsam können mittels der Zutrittskamera 4 und der Bereichskamera 5 Bilder von den im Bereich 1 anwesenden Personen 6, 17 und Objekten gemacht werden, welche als bereichsinterne Sensordaten beziehungsweise auch als bereichsexterne Sensordaten vorliegen.

Die mittels der Kameras erstellten Sensordaten können beispielsweise physikalische Größen wie Geometrie, Farbe der Personen 6, 17 oder des Objektes umfassen. Durch einen Abgleich der bereichsexternen Sensordaten und der bereichsinternen Sensordaten kann erkannt werden, ob sich das durch die Umgebungskamera 10 detektierte gefährliche Objekt 28 im Bereich 1 bewegt und dementsprechend die forensische Suche durchgeführt werden.

Alarmanlagen geben nach der allgemeinen Erfahrung Fehlalarme aus. Ein Alarm einer Alarmanlage kann auch durch die Detektion einer zweiten Person 17 im Bereich verifiziert werden, welche zweite Person 17 den Bereich 1 nicht über den Zugang 12 betreten hat.

Das obige Ausführungsbeispiel zeigt mögliche Ausführungsvarianten, wobei die Erfindung keinesfalls auf diese speziellen Ausführungsvarianten eingeschränkt sein muss, sondern vielmehr auch hier nicht explizit angeführte Kombinationen der bereichsexternen Sensordaten und der bereichsinternen Sensordaten möglich sind und diese Variationsmöglichkeiten aufgrund der Lehre zum technischen Handeln durch gegenständliche Erfindung im Können des auf diesem technischen Gebiet tätigen Fachmannes liegen.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

**Bezugszeichenaufstellung**

| | | | |
|---|---|---|---|
| 1 | Bereich | 29 | Teppich |
| 2 | Zutrittskontrolle | 30 | (frei) |
| 3 | Zutrittskartenlesegerät | 31 | Bereichsmessgerät |
| 4 | Zutrittskamera | 32 | Bewegte Kamera |
| 5 | Bereichskamera | 33 | Kamerabewegungsbahn |
| 6 | erste Person | | |
| 7 | Bereichslichtquelle | | |
| 8 | Bereichsbewegungsbahn der ersten Person | | |
| 9 | Sollbereichsdaten | | |
| 10 | Umgebungskamera | | |
| 11 | Umgebungsbereich | | |
| 12 | Zugang | | |
| 13 | Ausgang | | |
| 14 | Zutrittssperre | | |
| 15 | Bankomat | | |
| 16 | Objektoberfläche | | |
| 17 | zweite Person | | |
| 18 | Bereichsbewegungsbahn der zweiten Person | | |
| 19 | Bereichsmikrofon | | |
| 20 | Bereichsmikrofon | | |
| 21 | Bereichsmikrofon | | |
| 22 | Geräuschquelle | | |
| 23 | Bereichsgrenze | | |
| 24 | Funkstation | | |
| 25 | Funkstation | | |
| 26 | Funkstation | | |
| 27 | Funkgerät | | |
| 28 | Gefährliches Objekt | | |

## Patentansprüche

1. Computerimplementiertes Verfahren zur Generierung einer Datenmenge zu einer Analyse von Ereignissen eines räumlich begrenzten Bereiches (1),
wobei eine Bereichsbilddatenmenge durch eine fotographische Aufnahme des Bereiches (1) erstellt wird,
in welcher Bereichsbilddatenmenge ein Objekt (6,17) detektiert wird und eine Trajektorie umfassend temporäre Koordinaten des Objektes (6,17) aus der Bereichsbilddatenmenge als Objektdaten umfassend objektbezogene Attribute extrahiert wird, **dadurch gekennzeichnet, dass**
bereichsexterne objektbezogene Sensordaten umfassend bereichsexterne physikalische Größen als bereichsexterne Attribute,
durch welche bereichsexternen objektbezogenen Sensordaten eine physikalische Größe beschreibend das Objekt (6,17,28) durch außerhalb des Bereiches (1) und/oder an der Bereichsgrenze (23) des Bereiches angeordnete bereichsexterne Sensoren beschreibbar sind, und/oder
bereichsexterne gerätebezogene Sensordaten umfassend bereichsexterne physikalische Größen als bereichsexterne Attribute,
durch welche bereichsexternen gerätebezogenen Sensordaten eine physikalische Größe beschreibend ein in der Umgebung (11) angeordnetes Gerät durch außerhalb des Bereiches (1) und/oder an der Bereichsgrenze (23) des Bereiches angeordnete bereichsexterne Sensoren beschreibbar sind, und/oder
bereichsinterne gerätebezogenen Sensordaten umfassend bereichsinterne physikalische Größen als bereichsinterne Attribute,
durch welche gerätebezogenen bereichsinternen Sensordaten eine physikalische Größe eines innerhalb des Bereiches angeordnetes bereichsinternen Gerätes durch innerhalb des Bereiches (1) angeordnete Sensoren beschreibbar sind, erstellt werden,
wobei die Objektdaten mit den bereichsexternen Sensordaten und/oder den bereichsinternen Sensordaten in der Datenbank durch die jeweiligen Attribute und/oder durch Attributbereiche zur Generierung einer Schnittmenge verknüpfbar sind.

2. Verfahren nach Anspruch 1, **dadurch gekennzeichnet, dass**
die Objektdaten umfassend objektbezogene Attribute physikalische Eigenschaften des Objektes (6,17) beschreiben.

3. Verfahren nach einem der Ansprüche 1 bis 2, **dadurch gekennzeichnet, dass**
die bereichsexternen gerätebezogenen Sensordaten, welche durch eine Zutrittskontrolle (2) als ein bereichsexternes Gerät generiert werden, Zutrittsdaten über den Eintritt und/oder Austritt eines Objektes (6,17) in den Bereich (1) beziehungsweise aus dem Bereich (1) umfassen.

4. Verfahren nach einem der Ansprüche 1 bis 3, **dadurch gekennzeichnet, dass**
die bereichsexternen gerätebezogenen Sensordaten als physikalische Größen Wetterdatenumfassen, welche Wetterdaten mittels einer Wetterstation als ein bereichsexternes Gerät ermittelt werden.

5. Verfahren nach einem der Ansprüche 1 bis 4, **dadurch gekennzeichnet, dass**
die bereichsinternen gerätebezogenen Sensordaten physikalische Eigenschaften des Volumens des Bereiches umfassen, welche physikalischen Eigenschaften des Volumens durch ein im Bereich (1) angeordnetes Bereichsmessgerät als ein bereichsinternes Gerät ermittelbar sind.

6. Verfahren nach einem der Ansprüche 1 bis 5, **dadurch gekennzeichnet, dass**
die bereichsinternen gerätebezogenen Sensordaten Daten mit bereichsinternen physikalischen Größen über ein in dem Bereich (1) situiertes Bediengerät als ein bereichsinternes Gerät umfassend eine elektrische Steuerung umfassen.

7. Verfahren nach einem der Ansprüche 1 bis 6, **dadurch gekennzeichnet, dass**
die Datenbank während der Detektion des Objektes unter einer Auswahl einer bereichsexternen Teilmenge bereichsexterner physikalischer Parameter und/oder einer bereichsinternen Teilmenge bereichsinterner physikalischer Parameter aus einer Menge von ermittelbaren bereichsexternen physikalischen Parametern beziehungsweise bereichsinternen physikalischen Parametern erstellt wird.

8. Computerimplementiertes Verfahren zu einer forensischen Suche in einer Datenbank nach einem der Ansprüche 1 bis 7, **dadurch gekennzeichnet, dass**
die Objektdaten und die bereichsexternen gerätebezogene Sensordaten und/oder die bereichsexternen objektbezogenen Sensordaten und/oder die bereichsinternen gerätebezogenen Sensordaten und die bereichsinternen objektbezogenen Sensordaten zur Generierung einer Schnittmenge auf gleiche Attribute und/oder Attributbereiche durchsucht werden.

## Geänderte Patentansprüche

### Geänderte Patentansprüche gemäss Regel 137(2) EPÜ.

1. Computerimplementiertes Verfahren zur Generierung einer Datenmenge zu einer Analyse von Ereignissen eines räumlich begrenzten Bereiches (1),
wobei eine Bereichsbilddatenmenge durch eine fotographische Aufnahme des Bereiches (1) erstellt wird,
in welcher Bereichsbilddatenmenge ein Objekt (6,17) detektiert wird und eine Trajektorie umfassend temporäre Koordinaten des Objektes (6,17) aus der Bereichsbilddatenmenge als Objektdaten umfassend objektbezogene Attribute extrahiert wird,
bereichsexterne objektbezogene Sensordaten umfassend bereichsexterne physikalische Größen als bereichsexterne Attribute,
durch welche bereichsexternen objektbezogenen Sensordaten eine physikalische Größe beschreibend das Objekt (6,17,28) durch außerhalb des Bereiches (1) und/oder an der Bereichsgrenze (23) des Bereiches angeordnete bereichsexterne Sensoren beschreibbar sind, und/oder
bereichsexterne gerätebezogene Sensordaten umfassend bereichsexterne physikalische Größen als bereichsexterne Attribute,
durch welche bereichsexternen gerätebezogenen Sensordaten eine physikalische Größe beschreibend ein in der Umgebung (11) ortsfest angeordnetes Gerät durch außerhalb des Bereiches (1) und/oder an der Bereichsgrenze (23) des Bereiches angeordnete bereichsexterne Sensoren beschreibbar sind,
und/oder
bereichsinterne gerätebezogenen Sensordaten umfassend bereichsinterne physikalische Größen als bereichsinterne Attribute,
durch welche gerätebezogenen bereichsinternen Sensordaten eine physikalische Größe eines innerhalb des Bereiches ortsfest angeordnetes bereichsinternen Gerätes durch innerhalb des Bereiches (1) angeordnete Sensoren beschreibbar sind, erstellt werden,
wobei die Objektdaten mit den bereichsexternen Sensordaten und/oder den bereichsinternen Sensordaten in der Datenbank durch die jeweiligen Attribute und/oder durch Attributbereiche zur Generierung einer Schnittmenge verknüpfbar sind
**dadurch gekennzeichnet, dass**
die Objektdaten und die bereichsexternen gerätebezogene Sensordaten und/oder die bereichsexternen objektbezogenen Sensordaten und/oder die bereichsinternen gerätebezogenen Sensordaten und die bereichsinternen objektbezogenen Sensordaten unter Generierung einer Schnittmenge auf gleiche Attribute und/oder Attributbereiche zur Verifizierung der ermittelten Bilddatenmenge durchsucht werden.

2. Verfahren nach Anspruch 1, **dadurch gekennzeichnet, dass**
die Objektdaten umfassend objektbezogene Attribute physikalische Eigenschaften des Objektes (6,17) beschreiben.

3. Verfahren nach einem der Ansprüche 1 bis 2, **dadurch gekennzeichnet**, dass> die bereichsexternen gerätebezogenen Sensordaten, welche durch eine Zutrittskontrolle (2) als ein bereichsexternes Gerät generiert werden, Zutrittsdaten über den Eintritt und/oder Austritt eines Objektes (6,17) in den Bereich (1) beziehungsweise aus dem Bereich (1) umfassen.

4. Verfahren nach einem der Ansprüche 1 bis 3, **dadurch gekennzeichnet, dass**
die bereichsexternen gerätebezogenen Sensordaten als physikalische Größen Wetterdatenumfassen, welche Wetterdaten mittels einer Wetterstation als ein bereichsexternes Gerät ermittelt werden.

5. Verfahren nach einem der Ansprüche 1 bis 4, **dadurch gekennzeichnet, dass**
die bereichsinternen gerätebezogenen Sensordaten physikalische Eigenschaften des Volumens des Bereiches umfassen, welche physikalischen Eigenschaften des Volumens durch ein im Bereich (1) angeordnetes Bereichsmessgerät als ein bereichsinternes Gerät ermittelbar sind.

6. Verfahren nach einem der Ansprüche 1 bis 5, **dadurch gekennzeichnet, dass**
die bereichsinternen gerätebezogenen Sensordaten Daten mit bereichsinternen physikalischen Größen über ein in dem Bereich (1) situiertes Bediengerät als ein bereichsinternes Gerät umfassend eine elektrische Steuerung umfassen.

7. Verfahren nach einem der Ansprüche 1 bis 6, **dadurch gekennzeichnet, dass**
die Datenbank während der Detektion des Objektes unter einer Auswahl einer bereichsexternen Teilmenge bereichsexterner physikalischer Parameter und/oder einer bereichsinternen Teilmenge bereichsinterner physikalischer Parameter aus einer Menge von ermittelbaren bereichsexternen physikalischen Parametern beziehungsweise bereichsinternen physikalischen Parametern erstellt wird.
